# EUROPEAN PATENT SPECIFICATION

(11) **EP 1 962 636 B1**
(45) Date of publication and mention of the grant of the patent: **08.03.2017**
(21) Application number: 06846051.8
(22) Date of filing: 23.12.2006
(51) Int. Cl.: A46B 5/02, B29C 43/20, B29C 65/02, B32B 3/30, A43B 17/02, B29D 35/14, A43B 1/00, B32B 5/02, B32B 7/12, B32B 25/12, B32B 27/12, B32B 27/36, B29K 105/00, B32B 27/40, B29C 37/00, B32B 25/04, B32B 27/28, B32B 27/30, B32B 27/32

(54) **METHOD OF MAKING POLYMERIC ARTICLES**
VERFAHREN ZUR HERSTELLUNG POLYMERER ARTIKEL
PROCEDE DE FABRICATION D'ARTICLES POLYMERES

(30) Priority: 23.12.2005 US 753871 P; 28.02.2006 US 777292 P
(43) Date of publication of application: 03.09.2008
(73) Proprietor: Polyworks, Inc., Lincoln, RI 02865 (US)
(72) Inventor: FOX, Richard B., North Smithfield, RI 02917 (US); WYNER, Richard M, North Scituate, RI (US)
(74) Representative: Ellis, Michael James
(86) International application number: PCT/US2006/049263
(87) International publication number: WO 2007/092091

(56) References cited:
- DE-U1-202005 011 497
- US-A- 2 670 501
- US-A- 5 766 704
- US-A- 5 932 046
- US-A- 6 129 799
- US-B1- 6 309 500
- US-B1- 6 324 703

## Description

### TECHNICAL FIELD

The present disclosure relates to methods of making polymeric articles and the articles made thereby and, in particular, to methods of making polymeric gel articles and the articles made thereby.

### BACKGROUND

Many frequently used objects comprise materials that are hard to the human touch and/or result in friction when disposed against a human body, especially in repetitive motions. It is generally thought desirable to make the body contacting regions of such objects as soft as possible in order to make their use more comfortable for a user e.g., by reducing pressure and/or friction. "Body contacting," as used herein, means contacting a user's skin and/or clothing. Many attempts have been made to make such objects or the body contacting regions of such objects more comfortable for a user. For example, relatively rigid razor and toothbrush handles have been provided with regions of softer materials, including disposing the softer regions with "fins," which bend more easily at thin gauge. Hairbrushes have been provided with a sheath of relatively soft polymeric material disposed about a rigid handle. Luggage, backpack, briefcase and purse handles have been provided with relatively thick padded handles.
US6129799 discloses a method and apparatus for making bladders filled with a high viscosity fluid or gel. An elastic film is placed over a cavity formed in a first mold half and vacuum drawn into the shape of the cavity. A quantity of fluid is then deposited on the first film in the cavity and the first film and fluid are overlaid with a second film.
The second mold half is placed in register with the first mold half to mate opposed sealing surfaces along an outer perimeter of the cavity. The vacuum is released to expel air from the cavity between the first and second films through channels corresponding to transverse grooves formed in the sealing surface of the first mold half. The first and second films are then welded at the sealing surfaces to form a sealed bladder filled with the fluid, and the fluid-filled bladder is removed from the mold halves.
US5932046 discloses a method for manufacturing a fabric covered cushion including the steps of coating one side of a stretchable fabric with gel/foam in order to make said fabric resistant to passage of air therethrough, disposing the coated fabric over a mold adapted for vacuum forming the cooled fabric and positioning at least one strap member in the mold with a portion of the strap member extending beyond a boundary of the mold. Thereafter, a vacuum is applied between the mold and the fabric in order to stretch the fabric and cause intimate contact between the fabric and the mold. An additional volume of foam is deposited on the fabric coating while the vacuum is being applied in order to enable bonding between the additional volume of gel/foam, the coated fabric and strap member. The additional gel/foam is allowed to set and bond with the fabric and the strap member, and a fabric covered cushion is removed from the mold having the selected contour.

A need exists in the art for improved methods of making polymeric articles.

### SUMMARY

The present disclosure is directed to a method of molding an article. The method comprises selecting a first mold section comprising an upper surface, the upper surface comprising a recessed region, and the recessed region comprising a plurality of mold units disposed therein; disposing a barrier layer onto the upper surface of the mold, the barrier layer comprising a thermoplastic elastomeric (TPE) material; dispensing a first portion of a polymeric gel precursor onto the barrier layer; disposing a stabilizing layer over the polymeric gel precursor and forming an interface between the gel precursor and the stabilizing layer; advancing the interface while applying pressure to the stabilizing layer adjacent to the interface, until the gel precursor is covered by the stabilizing layer; closing the mold; forming a polymeric gel from the gel precursor; and removing a sheet comprising a plurality of molded articles interconnected by a layer of polymerized gel. The method can comprise releasing the molded articles from the sheet. The method also can comprise disposing a fabric layer onto the barrier layer before dispensing the first portion of the polymeric gel precursor. The method also can comprise disposing a fabric layer onto the first portion of the gel precursor before disposing the stabilizing layer; disposing a fabric layer onto the first portion of the gel precursor, and disposing a second portion of the gel precursor onto the fabric layer. An adhesive material also can be disposed onto the stabilization layer and/or the fabric layer. The polymerized layer and the stabilizing layer can each comprise an adhesive strength, and the adhesive strength of the stabilizing layer is less than the adhesive strength of the polymerized layer. The barrier layer can comprise a support layer, and the barrier layer can be disposed on the mold with the support layer adjacent to the upper surface of the mold. The barrier layer and/or the stabilizing layer can comprise opposing surfaces, and a release agent can be disposed on one or both of the opposing surfaces. The release agent can be disposed on a surface of the barrier and/or stabilizing layers adjacent to the gel precursor.

A method of using such an article can comprise manually removing the stabilizing film from the article, and adhering the polymeric gel to a surface.

An article and especially a shoe insert may be formed by the foregoing method. The shoe insert can comprise a thermoplastic elastomeric (TPE) barrier layer; a polymerized gel layer comprising a hardness ranging from about 30 Shore 000 to about 75 Shore 00; and a stabilizing layer disposed adjacent to the polymerized gel layer and opposite the barrier layer. The TPE can be selected from the group comprising thermoplastic polyurethane (TPU), silicone, and combinations comprising at least one of the foregoing. The barrier layer can comprise a support layer, and the TPE can be disposed on the support layer, adjacent to the polymerized gel. A release agent can be disposed between the polymerized gel and the stabilizing layer. The release agent can be disposed on a surface of the stabilizing layer adjacent to the polymerized gel layer. The polymerized gel layer can comprise a thermoplastic polyurethane. An active agent can be disposed in the barrier layer, and the active agent can be selected from the group consisting of silver, tolnaftate, undecenoic acid, allylamines, chlorine, copper, baking soda, sodium omadine, zinc omadine, azoles, and combinations comprising at least one of the foregoing. The polymerized gel can comprise an adhesive strength sufficient to adhere to the inner surface of a shoe.

The shoe insert may comprise a thermoplastic elastomeric barrier layer, the barrier layer comprising an active agent; a polymerized gel layer; and a stabilizing layer disposed adjacent to the polymerized gel layer and opposite the barrier layer. The active agent can be selected from the group consisting of silver, tolnaftate, undecenoic acid, allylamines, chlorine, copper, baking soda, sodium omadine, zinc omadine, azoles, and combinations comprising at least one of the foregoing. The TPE can be selected from the group comprising thermoplastic polyurethane (TPU), silicone, and combinations comprising at least one of the foregoing. The barrier layer can comprise a support layer, and the TPE can be disposed on the support layer, adjacent to the polymerized gel. The polymerized gel layer can comprise a hardness ranging from about 30 Shore 000 to about 75 Shore 00. A release agent can be disposed between the polymerized gel and the stabilizing layer. The release agent can be disposed on a surface of the stabilizing layer adjacent to the polymerized gel layer. The polymerized gel layer can comprise thermoplastic polyurethane. The polymerized gel can comprise an adhesive strength sufficient to adhere to the inner surface of a shoe.

The above described and other features are exemplified by the following figures and detailed description.

### DRAWINGS

Referring now to the figures, which are exemplary embodiments, and wherein like elements are numbered alike:
Figure 1 is a perspective view an exemplary mold that can be used in the method according to the present disclosure;
Figure 2 is an enlarged perspective view of a portion of the mold shown in Figure 1;
Figure 3 is a cross-sectional schematic view of the mold shown in Figure 1, through line 3-3;
Figure 4 shows the application of a barrier layer to the mold shown in Figure 3;
Figure 5 shows the application of a gel precursor to the barrier layer shown in Figure 4;
Figure 6 shows the application of a stabilization layer to the gel precursor shown in Figure 5;
Figure 7 shows the method of advancing the stabilization layer over the gel precursor shown in Figures 5 and 6;
Figure 8 shows the stabilization layer covering the gel precursor;
Figure 9 shows the mold being closed;
Figure 10 shows the mold after closure and the polymerization of the gel precursor;

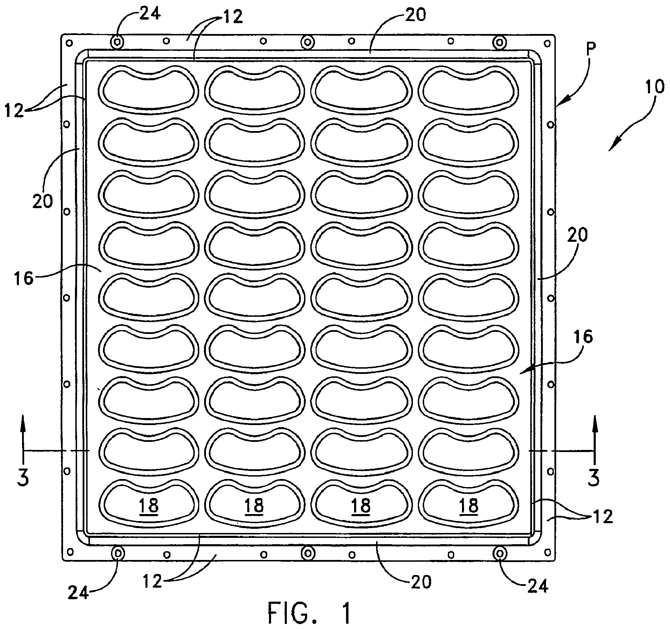

Figure 1 shows a sheet of material containing molded units, after removal from the mold;

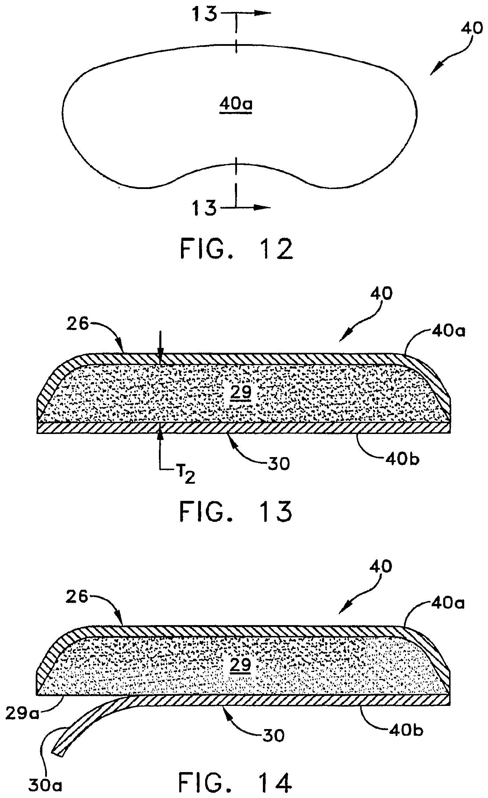

Figure 12 is a top view of an exemplary shoe heel insert;
Figure 13 is a cross-sectional view of the insert of Figure 12, through lines 13-13;
Figure 14 is a cross-sectional view of the insert of Figure 12, through lines 13-13, showing release of a stabilizing layer from an adhesive layer;

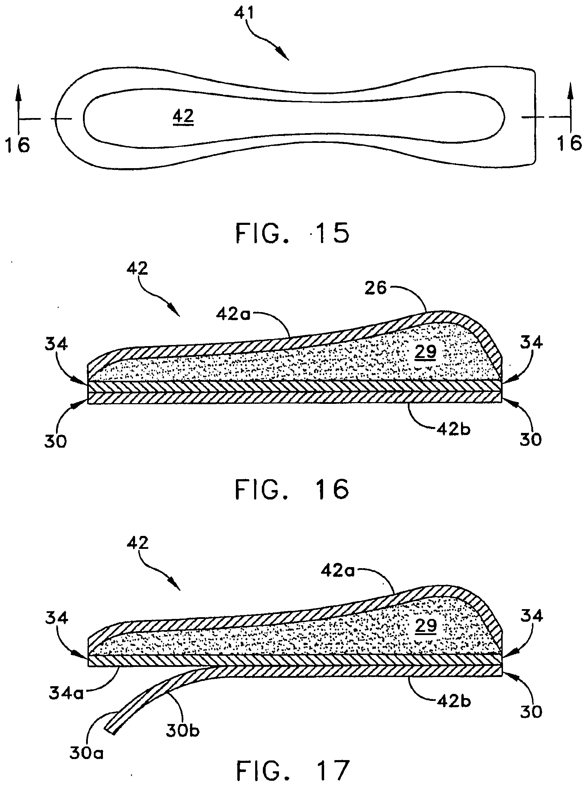

Figure 15 is a top view of an exemplary rigid toothbrush handle with a polymeric gel handle insert according to the present disclosure, and showing text in phantom;
Figure 16 is a cross-sectional view of the handle insert of Figure 15;
Figure 17 is a cross-sectional view of the handle insert of Figure 15, showing release of the stabilizing layer from the polymeric gel;
Figure 18 is a cross-sectional view of the rigid toothbrush handle, through lines 18-18, showing the polymeric gel insert adhered in a recess in the rigid handle;
Figure 19 is a cross-sectional view of an alternative toothbrush handle insert comprising a flange;
Figure 20 is a cross-sectional view of the rigid toothbrush handle shown in Figure 15, showing the flange of the polymeric gel insert disposed in a recess in the rigid handle.

### DETAILED DESCRIPTION

The present disclosure is directed to methods of making polymeric articles and the articles made thereby, particularly methods of making relatively low durometer polymeric articles. Relatively low durometer polymeric materials can be extremely tacky, making them difficult or impossible to use in commercial processing techniques such as injection molding, because the materials will adhere to the molds. In addition, such materials can comprise relatively low durability in comparison to other materials, including other polymeric materials. Thus, applications for relatively low durometer polymeric gel materials have been limited, despite their advantageous pliability and softness characteristics.

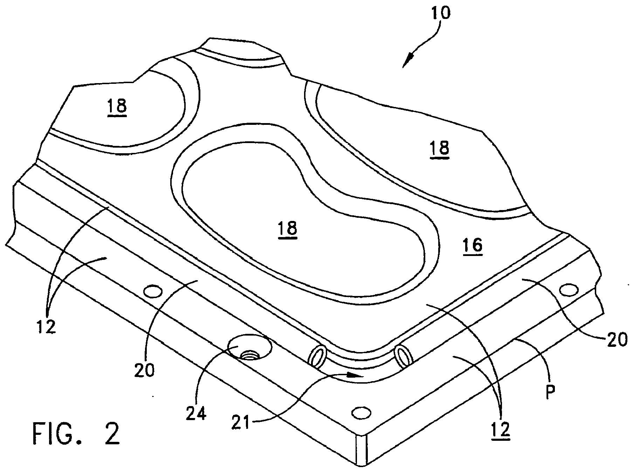

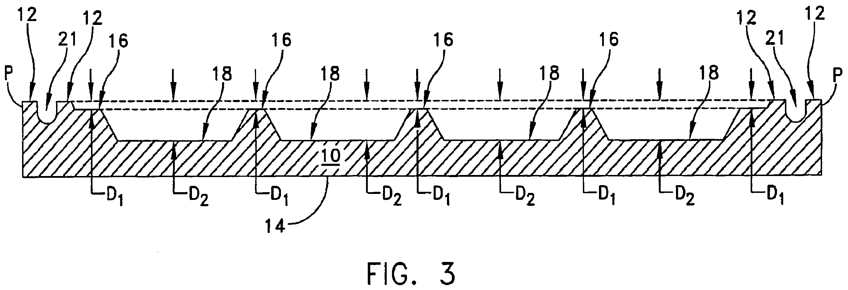

Figures 1 - 11, when taken together, illustrate an exemplary method for forming polymeric gel articles. The present method involves selecting a suitable mold 10 for the desired product, as shown in Figures 1-3, which can comprise opposing upper and lower surfaces 12, 14. As shown, mold 10 can comprise a recessed region 16 defined in the upper surface 12 of the mold, which is recessed from the upper surface 12 by a depth "D₁". It should be understood that the terms "bottom" and "top," and/or "upper" and "lower" are used herein, unless otherwise noted, merely for convenience of description, and are not limited to any one position or spatial orientation. Also, it should be understood that the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. Further, unless defined otherwise, technical and scientific terms used herein have the same meaning as is commonlyy understood by one of skill in the art to which this disclosure belongs.

The present mold 10 comprises thirty-six (36) individual mold units 18 defined in the recessed region 16, each of which corresponds to the shape and size of the desired final molded product 19, which in this instance is a shoe heel insert. Although illustrated herein as a shoe heel insert for the sake of convenience, it should be understood that a variety of products can be molded using the present method. Each of the thirty-six (36) individual mold units 18 is recessed from the upper surface 12 by a depth "D₂", which corresponds to the desired thickness of the final molded product 19.

Mold 10 also can comprise a gasket recess 21 disposed between the recessed region 16 and the perimeter "P" of the mold 10, in which a gasket 20 can be disposed. Alternatively, gasket 20 can be disposed directly on the upper surface 12 of the mold 10. Gasket 20 can provide a seal sufficient to restrict the flow of polymer from the mold 10. Gasket 20 or mold 10 can comprise periodic openings 22 to allow entrapped air to flow out of the mold 10 during the molding process. For example, as shown, gasket 20 can comprise openings 22. Optionally, the mold 10 can comprise one or more registration guides 24.

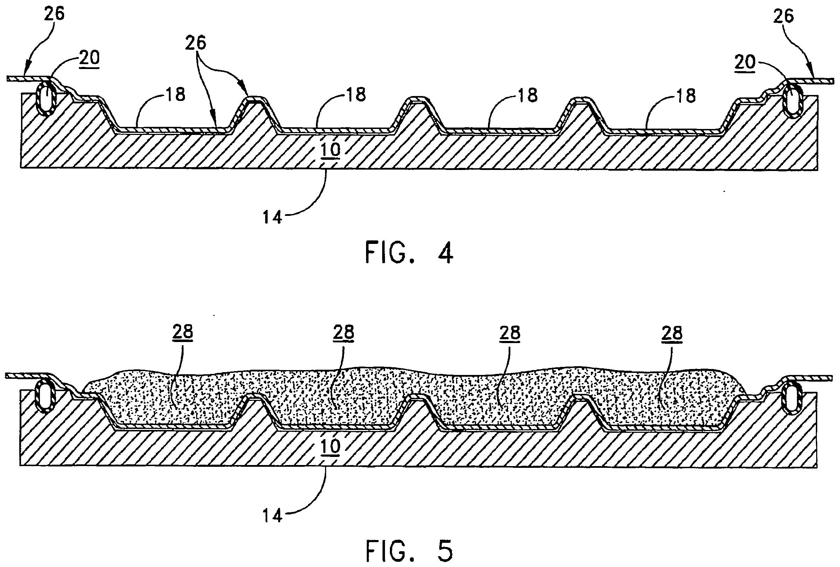

As shown in Figure 4, after selection of a suitable mold 10, the method can comprise disposing a barrier layer 26 onto the mold 10. The barrier layer 24 can be disposed onto the mold 10 as a sheet of material, or as a coating applied directly onto the mold. When applied as a sheet 24, then barrier layer 24 can be applied onto the mold and in physical contact with the gasket 20. When applied as a sheet, then the barrier layer 26 also can comprise registration guides (not illustrated) corresponding to the registration guides 24 in the mold 10, in order to aid in its alignment to the mold 10 and to subsequent layers. If the barrier layer 26 is not disposed as a sheet, then it can be disposed directly onto the upper surface 12 of mold 10. If desired, a release coating may be used to assist in releasing the barrier layer 12 from the upper surface 12 of mold 10.

As shown in Figure 5, after disposing the barrier layer 26 onto the upper surface 12 of the mold 10, a gel precursor 28 can be dispensed onto the barrier layer 26. The gel precursor 28 can be disposed onto the barrier layer 26 using a variety of techniques such as, but not limited to, pouring, injecting, and/or the like.

Dispensing the gel precursor 28 can comprise pouring a sufficient amount of the gel precursor to fill each of the thirty-six (36) individual mold units 18, rather.than filling a single mold unit 18, as in other processes such as injection molding. For example, other methods, such as injection molding, may involve dispensing the gel precursor 28 separately to each mold unit 18. Therefore, using the present mold, thirty-six (36) separate dispensing steps would be required. In contrast, the present method can comprise dispensing the gel precursor 28 only once onto the barrier layer 26, and the single dispensation of gel precursor 28 can provide a sufficient amount of gel precursor 28 to form all of the mold units 18 in a single molding cycle. Dispensing the gel precursor 28 in bulk, rather than separately, can substantially reduce the manufacturing time of the present method in comparison to other methods.

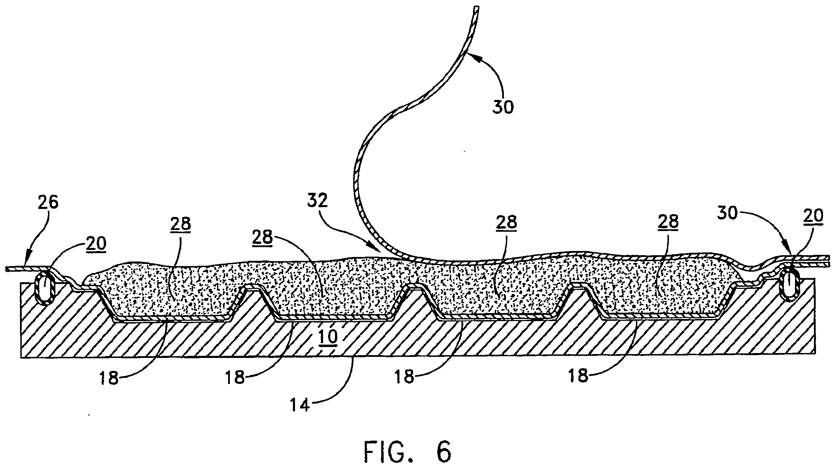

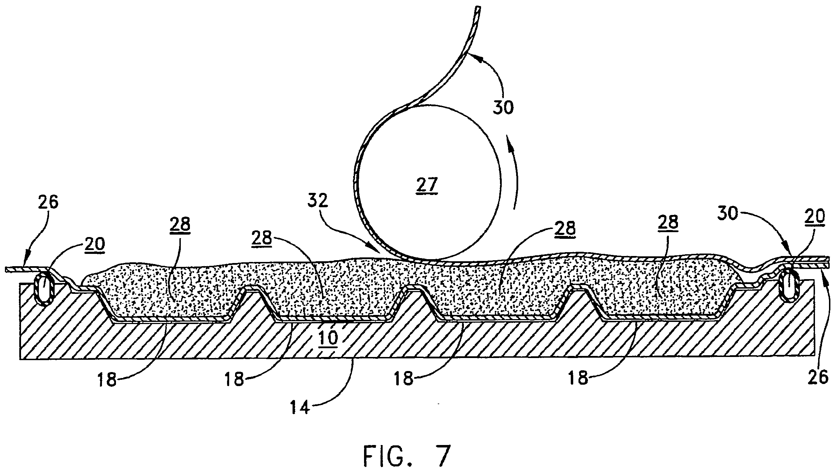

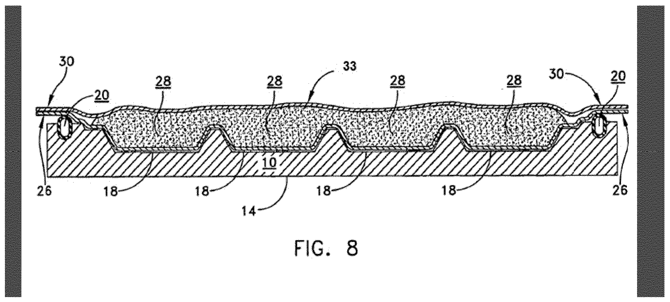

As shown in Figure 6, after dispensing the gel precursor 28 onto the barrier layer 26, a stabilizing layer 30 can be disposed over the gel precursor 28, for example, as a sheet. If mold 10 comprises registration guides 24, then the stabilizing layer 30 also can comprise corresponding registration guides (not illustrated) to aid in its alignment to the mold 10 and to any subsequent layers. Disposing the stabilizing layer 30 onto the gel precursor can comprise disposing a portion of the stabilizing layer 30 onto a portion of the gel precursor 28 such that an interface 32 exists between the gel precursor 28 and the stabilizing layer 30. Disposing the stabilizing layer 30 onto the gel precursor 28 can be performed manually, with a tool such as a roller, as shown in Figure 7, or the process can be automated. The remaining portion of the stabilizing layer 30 can be advanced onto the remaining portion of the gel precursor 28 by applying pressure to the stabilizing layer 30 behind the interface 32, and advancing the interface 32 until the stabilizing layer 30 covers the entire gel precursor 28, as shown in Figure 8. The application of pressure while advancing the stabilizing layer 30 substantially minimizes the formation of air bubbles between the gel precursor 28 and the stabilizing layer 30.

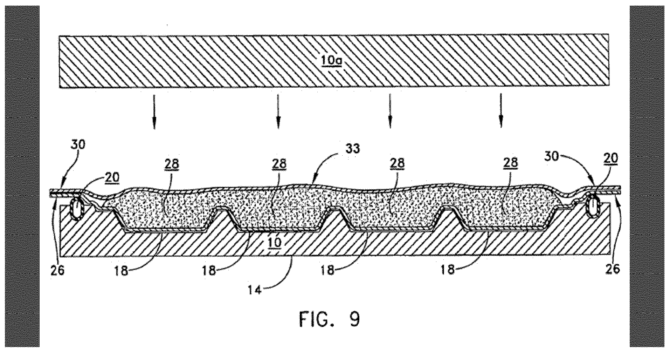

As shown in Figure 9, the mold 10 can be closed, for example by disposing a mold cover 10a over the stabilizing layer 30. When the mold 10 is closed, the gel precursor 28 can flow into all regions of the mold 10 defined by the gasket 22, and any entrapped air can flow out of the mold through gasket openings 21.

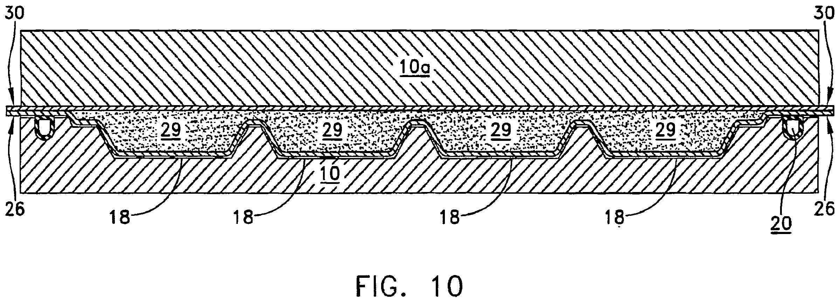

As shown in Figure 10, the gel precursor 28 can be allowed to form a polymerized gel 29 in the closed mold 10 for a predetermined period of time (e.g., 30 seconds to 5 minutes). If desired, pressure and/or a vacuum can be applied to the mold for various reasons e.g., to increase the speed of processing, to improve the quality of the final material, to change the surface characteristics of the polymerized gel, and/or the like. As a result, the overall processing time for producing a plurality of molded products 19 can be substantially reduced in comparison to other methods such as injection molding. In addition, because the time used to dispense the gel precursor 28 is reduced in comparison to other methods, it is possible to increase the speed of curing by varying a number of factors such as, for example, pressure, temperature, catalyst concentration (when used), and/or the like. The use of pressure and/or vacuum during the molding process can be desirable when the articles to be formed require more definition such as undercuts, and the like. When vacuum forming or thermoforming, it can be desirable to utilize molds formed at least in part from a porous composite material, which allows the formation of intricate details and surface patterns in the molded article, and eliminates the necessity for vent holes in the mold. One example of such a porous composite material is breathable aluminum, which is available commercially under the brand name METAPOR^{™}.

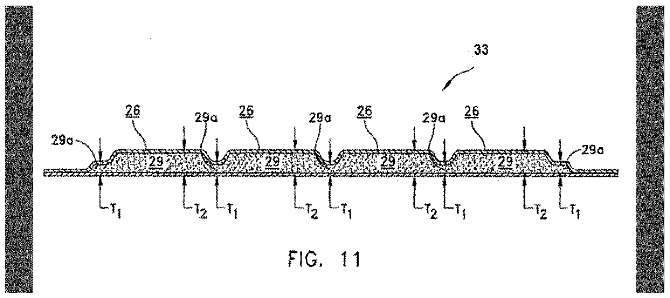

After curing, the mold 10 can be opened, and a sheet 33 comprising the molded products 19 can be removed from the mold 10, as shown in Figure 11. The presence of the barrier layer 26 and the stabilization layer 30 can facilitate the handling of the sheet 33 because the polymizerized gel 29 is encapsulated by the layers 26, 30, which can be advantageous when the the polymerized gel 29 has adhesive properties that would otherwise cause it to adhere to surfaces such as the mold surface, a user's hand, and the like. The sheet 33 comprises a plurality of relatively thin regions 29a of the polymerized gel 29 disposed between the barrier layer 26 and the stabilization layer 30s and interconnecting the molded products 19. The regions 29a of polymerized gel can comprise a thickness "Ti" corresponding to the depth Di of the recessed region 16 of mold 10. In order to minimize waste, the depth Di of the recessed region 16 can be selected to be as small as possible while still allowing unrestricted flow of the gel precursor 28 into the region defined by the gasket 22. Thus, the depth Di and thickness "T" of can be varied.

The molded products 19 can be separated from the sheet 33 and from each other by cutting (e.g., die cutting, and the like) through the barrier layer 26, polymerized gel regions 29a and stabilization layer 30. The molded products 19 can be die cut between the polymerized gel regions 29 and 29a and/or through the polymerized gel region 29. When the polymerized gel 29 has adhesive properties, then it may be desirable to die cut through a portion of the polymerized gel regions 29 adjacent to the polymerized gel region 29a, such that the sides of the molded units 19 comprise an exposed region of polymerized gel. During die cutting, the presence of the stabilization layer 30 prevents or minimizes the polymerized gel 29 and barrier layer 26 from shrinking, thereby substantially maintaining the dimensions of the molded products 19 in comparison to the dimension of the mold units 18. Because shrinkage of the molded products 19 can be minimized, it may not be necessary to factor shrinkage into the design of the molds, as may be necessary with other methods.

Optionally, a layer 34 can be disposed between any of the foregoing layers e.g., between the stabilization layer 30 and the polymerized gel 29 and/or between the polymerized gel 29 and the barrier layer 26. Also optionally, the layer 34 can be disposed in the polymeric gel 29 e.g., by disposing a first portion of the gel precursor 28 onto the barrier layer 26, disposing the layer 34 over the first portion of the gel precursor 28, and disposing a second portion of gel precursor 28 over the layer 34. Layer 34 can comprise a variety of materials including, but not limited to, paper, fabric, plastic film, and/or the like, as well as composites and/or combinations comprising at least one of the foregoing. Layer 34 also can comprise color, graphics and/or indicia, including text. When layer 34 comprises a fabric layer, the fabric can be knit, woven, non-woven, synthetic, non-synthetic, and combinations comprising at least one of the foregoing. Disposing a fabric layer as layer 34 can be advantageous because it can trap and disperse air bubbles that may otherwise form in or between the layers, resulting in a better appearance for the final molded products 19. Also, the color, design and/or indicia disposed on layer 34 can be transmitted through other layers when they are formed from colorless and/or transparent materials, which can be desirable for aesthetic purposes, as best shown in Fig. 15.

Also optionally, layer 34 can be used in place of the stabilization layer 30. If layer 34 replaces the stabilization layer 34, then it can be applied in the same manner described above with respect to the stabilization layer 34.

In some instances, it may be desirable to be able to adhere the molded products 19 to various surfaces. Therefore, optionally, an adhesive (not illustrated) may be disposed on one or more surfaces of the final molded products 19. Also optionally, an adhesive can be disposed and/or on one or more surfaces of layers 26, 28, 30 and 34. For example, with reference to Figure 11, an adhesive can be disposed on surface 30b, and the adhesive can be supported by a release and/or support layer (not illustrated). Some possible adhesives can comprise pressure sensitive adhesives, thermoplastic adhesives, and the like, as well as combinations comprising at least one of the foregoing. One example of such a material is available from 3M as product number 7026.

In some instances, the polymerized gel 29 may comprise sufficient adhesive strength to be adhered to a surface in the absence of a separate adhesive. In such instances, it may be desirable that the stabilizing layer 30 can be capable of manual release from the polymerized gel 29. Therefore, optionally, the stabilizing layer 30 can comprise a release coating (not illustrated) such as silicone, disposed on surface 30a, which can assist in the manual release of the stabilizing layer 30 from the polymerized gel 29.

A variety of materials can be used in the foregoing methods to make the foregoing molded products 29. The barrier layer 26 can comprise any material capable of providing sufficient elasticity to prevent tearing and/or stretching when a force is applied thereto; sufficient structural integrity to be formed into predetermined shapes; and that is capable of withstanding the environment in which it is intended to be used, without substantial degradation. The barrier layer 26 also can be selected to facilitate the handling of the polymerized gel layer, which can comprise adhesive characteristics in some instances. Therefore, after molding, the barrier layer 26 can be selected to comprise a relatively non-tacky surface and a relatively smooth feel to the human touch. Some possible materials for the barrier layer 26 include polyolefins, polystyrenes, PVC, latex rubber, and thermoplastic elastomers (TPEs), and/or the like, and combinations comprising at least one of the foregoing materials. Some possible TPE materials include polyurethane, silicone, and/or the like, and combinations comprising at least one of the foregoing materials. The barrier layer 26 can comprise an elongation of about 100 percent (%) to about 1500 %, more particularly about 200% to about 1000%, and more particularly still about 300% to about 700%". It should be understood that the modifier "about" used in connection with a quantity is inclusive of the stated value and has the meaning dictated by the context (e.g., includes the degree of error associated with measurement of the particular quantity).

Barrier layer 26 can comprise any thickness. For practical purposes it has been found that thinner layers can provide improved hand-feel, while thicker layers can provide increased durability. Therefore, it is desirable to use the thinnest barrier layer possible in order to prevent punctures in the barrier layer 26. When the polymerized layer 29 is tacky, puncturing the barrier layer 26 can expose the underlying tacky material of the polymerized gel 29, making it difficult to handle. Barrier layer 26 can comprise a thickness ranging from about 0.005 mm (∼0.2 milli-inch) (hereinafter "mil") to about 0.13 mm (∼5 mil), more particularly from about 0.013 mm (∼0.5 mil) to about 0.08 mm (∼3 mil), and more particularly still from about 0.015 mm (∼0.6 mil) to about 0.05 mm (∼2 mil).

As noted above, barrier layer 26 can be applied as a sheet of material during the molding process. In the form of a sheet, and especially when the barrier layer is relatively thin, the barrier material can be very flexible and may wrinkle and/or fold very easily during handling, which is not desirable. Therefore, the barrier layer 26 also can comprise a support layer (not illustrated), which assists in handling the material. If the barrier layer 26 comprises such a supporting layer, then the supporting layer can be disposed adjacent to the upper surface 12 of the mold 10, with the barrier layer material facing away from the upper surface 12, which can be removed prior to die cutting, if desired or necessary.

Also as noted above, if barrier layer 26 is not applied as a sheet, then it can be applied as a coating of material during or after the molding process. If applied after the molding process, then the barrier layer can be disposed onto the polymeric gel 28 after formation of the molded units 18, for example by painting, spraying, brushing manually, and/or the like. When the barrier layer 26 is not disposed as a sheet or is not disposed as a coating during the molding process, then the gel precursor 28 can be disposed directly onto the upper surface 12 of mold 10, which may require the use of a release agent on the upper surface 12.

The polymerized gel 29,29a can comprise any polymeric material comprising sufficient structural integrity to be formed into predetermined shapes, including foam polymeric materials; sufficient softness and/or pliability to provide comfort against a body; and that is capable of withstanding the environment in which it is intended to be used, without substantial degradation. The polymeric material can comprise a thermosetting polymeric material, an elastomeric polymeric material, athermoplastic material, including a thermoplastic elastomeric material, and combinations comprising at least one of the foregoing. Some possible materials for the polymerized gel 29,29a comprise polyurethane, silicone, and/or the like, and combinations comprising at least one of the foregoing materials.

Formation of the gel precursor 28 can take place by a variety of methods known to those of skill in the art. For example, formation of a polyurethane gel can comprise reacting suitable pre-polymeric precursor materials e.g., reacting a polyol and an isocyanate in the presence of a catalyst. In some embodiments, the polymerized gel 29,29a can comprise sufficient adhesive strength to adhere to a selected surface (such as the inner surface of a shoe). It is possible to vary the adhesive strength of the polymerized gel 29,29a by varying, for example, the durometer of the material used to form the layer. In addition, the durometer of the polymerized gel 29,29a can be selected to provide articles and/or regions of articles with a predetermined hardness, which can be tailored for specific cushioning and/or wear resistance applications.

The polymerized gel 29,29a can comprise a durometer ranging from about 0.01 Shore 00 to less than or equal to about 70 Shore A, more particularly less than 70 Shore 00, more particularly still less than 60 Shore 00. In some instances, it may be desirable that the polymerized gel 29, 29a have adhesive characteristics in order to eliminate the use of a separate adhesive to adhere molded units 29 to a desired surface. In such instances, the polymerized gel can comprise a durometer of about 30 Shore 000 to about 85 Shore 00. Polymeric gel materials in such relatively low durometer ranges can comprise a jelly-like consistency. One possible material having such adhesive characteristics is a polyurethane gel comprising a durometer in the range of about 70 Shore 00 to about 85 Shore 00, which can provide sufficient adhesive strength to adhere to a desired surface, such as the surface of an inner shoe, or a rigid plastic such a polypropylene. The polymeric gel 29 and/or the barrier layer 26 can comprise one or more additives such as, but not limited to, modifiers, coloring agents, stabilizers, phase changing materials, ultraviolet inhibitors, and/or active agents as well as combinations comprising at least one of the foregoing. The concentration of the additive can be varied depending on the desired effectiveness of the agent.

One possible phase changing materials can comprise phase changing microspheres (available under the product name Outlast), which contain materials that can change phases at near body temperature. As a result, heat energy can be stored in the barrier layer, resulting in a product that can feel cool or warm.

Suitable active agents can comprise tolnaftate, undecenoic acid, allylamines, chlorine, copper, baking soda, sodium omadine, zinc omadine, azoles, silver, and/or the like, and combinations comprising at least one of the foregoing. For example, silver can provide an antifungal/antibacterial effect. For purposes of economy and effectiveness, it has been found advantageous to include active agents, when used, in the barrier layer 26. Because the barrier layer 26 is relatively thin in comparison to the polymeric gel 29, disposing such agents in the barrier layer 26 allows the use of reduced total amounts of the agents to achieve similar effective concentrations in comparison to thicker layers, thereby reducing costs associated with the additives. Also, disposing such agents in the barrier layer 26 ensures that the agents are disposed in the outermost layer of the article i.e., the body contacting regions, rather than in regions remote from the user, which can increase the effectiveness of the agents.

In some instances, it may be desirable to use colorless materials for each of the barrier, polymerized gel and stabilization layers, which can be desirable for aesthetic reasons. For example, it can be desirable to use colorless shoe inserts, particularly in women's shoes, which are sometimes open-toed, or open-heeled.

The stabilizing layer 30 can comprise a material that is capable of substantially minimizing shrinkage of the barrier layer 26, gel precursor 28 and/or the polymerized gel 29 during and after processing; providing support for the polymerized gel 29; and that is capable of facilitating handling of the polymerized gel 29 and the barrier layer 26. The stabilizing layer/30 can comprise any material that is substantially inelastic in comparison to the polymerized gel 29, in order to be capable of providing dimensional stability to the sheet 33 and/or to the molded products 19 during and after processing. Some possible materials for the stabilizing layer 30 include, but are not limited to, fabrics, paper, plastic (e.g., polyester, polyethylene, polyvinyl chloride (PVC), and the like) metal, metallized plastic, and/or the like, and combinations comprising at least one of the foregoing materials. One possible material is oriented polyester film, which is commercially available from a variety of sources and a under variety of different product names (e.g., Mylar(R)). Stabilization layer 30 can comprise a thickness ranging from about 0.2 mil to about 10 mil, more particularly from about 0.5 mil to about 5 mil, and more particularly still from about 1 mil to about 2 mil.

The foregoing methods and materials can facilitate the manufacture of polymeric articles and/or regions of articles, which can be desirable for aesthetics and/or to minimize wear and/or friction. The methods can be used to form polymeric articles and/or regions of articles, comprising any size, thickness or geometry. The size, thickness, geometry, softness, and adhesive strength of the articles and/or portions of the articles can be selected to optimize the conditions for which it is designed. Examples of articles in which the foregoing polymeric materials can be useful include, but are not limited to, handles for personal care objects such as hairbrushes, toothbrushes and razors; medical devices such as masks, crutches and casts; handles for household objects such as brooms; straps for luggage, backpacks, briefcases and purses; clothing such as cycling shorts, undergarments and shoes; utility objects such as mousepads, keyboard rests; handles and/or straps for consumer goods such as bottles and/or boxes, laundry detergent handles; sporting goods equipment and accessories such as racquet grips, bat handles, fishing rod grips, guns, and bicycle handlebar grips; and the like. In addition, the articles can comprise indicia such as labels with color, text and/or graphics, and the like.

Figures 12-14 show an illustrative article (a shoe heel insert 40 (hereinafter "heel insert")) which can be formed using the foregoing methods and materials. Heel insert 40 can comprise opposing upper and lower surfaces 40a,40b. In the present illustrative embodiment, heel insert 40 can comprise a thickness of about 3.17 mm (∼1/8 inch). A barrier layer 30 can be disposed adjacent to a polymerized gel layer 29, and a stabilizing layer 30 can be disposed on a side of the gel layer 29 opposite the barrier layer 26. If desired, the heel insert 40 can comprise an antifungal agent disposed in the barrier layer 26. In one illustrative embodiment, the barrier layer 26 can comprise an active agent such as silver, to prevent and/or treat the condition of athlete's foot. One possible barrier layer 26 comprising such an active agent is Vacuflex 18411, available from Omniflex, Inc.

In one illustrative embodiment, the polymerized gel layer 29 can comprise an adhesive strength sufficient to allow it to adhere to a surface, such as the inner surface of a shoe. Thus, the stabilizing layer 30 can optionally comprise a release coating (not illustrated) such as silicone, disposed on surface 30a, which can assist in the manual release of the stabilizing layer 30 from the polymerized gel 29, thereby exposing the polymerized gel 29 in order to allow it to be adhered to a surface.

In another illustrative embodiment, an adhesive (not illustrated) can be disposed on surface 40b of the stabilizing layer 30 to allow heel insert 40 to be adhered to a surface, such as the inner surface of a shoe. Such an option may be useful, for example, if the stabilizing layer 30 does not comprise a release coating on surface 30a.

Figures 15-18 show another illustrative article, which is a substantially rigid toothbrush handle 41 comprising an insert 42 (hereinafter "handle insert") which can be formed using the foregoing methods and materials. Handle insert 42 comprises an upper surface 42a opposite a lower surface 42b. The handle insert 42 can comprise a thickness that varies from about 3.17 mm (∼1/8 inch) to 9.52 mm (∼3/8 inch). In the present illustrative embodiment, handle insert 42 can comprise a barrier layer 26 disposed adjacent to a polymerized gel layer 29, a fabric layer 34 disposed on a side of the polymerized gel layer 29 opposite the barrier layer 26, and a stabilization layer 30 disposed adjacent the fabric layer opposite the gel layer 29. In the present illustrative embodiment, an adhesive can be disposed between the fabric layer 34 and the stabilization layer 30. If desired, the handle insert 42 can comprise an antifungal agent disposed in the barrier layer 26, as in the previous embodiment. As shown in Figure 18, and can be disposed in the substantially rigid toothbrush handle 41.

Figures 19-20 show another illustrative article, which is a toothbrush handle 41' comprising a channel for receiving a flanged portion of the handle insert. Handle insert 42' comprises the same materials as in the previous embodiment, and additionally comprises a flange 42a disposed around the insert. As in the previous embodiment, handle 41 can comprise a recess (not illustrated) configured to receive the handle insert 42, including a channel (not illustrated) for receiving the flange 42a. Disposing the handle insert 42 into the toothbrush handle 41 can comprise disposing the flange 42a in the channel and the body portion in the recess. If it is desired to further secure the handle insert 41, the stabilization layer 30 can be released from the fabric layer 34, and handle insert 42 can be disposed in the recess and adhered in the recess using the adhesive, as shown in Figure 20.

The following non-limiting examples further illustrate the various embodiments described herein.

### WORKING EXAMPLES

### EXAMPLE 1

Formation of a colorless, transparent self-adhesive heel insert for a shoe.

A metal mold defining thirty six (36) heel inserts was selected for use. The mold comprised a recessed region of about 0.508 mm (∼0.020"), and a gasket spaced apart both from the perimeter of the mold edge and from the recessed region. The dimensions of each of the 36 mold units was about 101.6 mm (∼4 inches) by about 12.7 mm (∼½ inch), and the depth of the mold units was uniform.

The mold was preheated to about 150°F, and a barrier layer was disposed as a sheet onto the upper surface of the mold. The barrier layer was Vacuflex 18411 (available from Omniflex, Inc.), which is a colorless, transparent polyurethane film having a thickness of about 0.75 mil, an elongation of about 400% to about 500%, and which was supported on a polyethylene support layer having a thickness of about 0.038 mm (∼1.5 mil). The barrier layer was disposed onto the upper surface of the mold such that the polyethylene layer was facing the mold and the polyurethane film was facing away from the mold.

About 243 grams (gm) of a gel precursor was prepared and manually poured onto the barrier layer. The gel precursor was a thermosetting polyurethane gel system available as WE 369-1 from Isotec International, and prepared using about 0.02 percent by weight (wt.%) based on the weight of the gel precursor. No coloring was added to the gel precursor.

A sheet of stabilizing film was disposed over a portion of the gel precursor. The stabilizing film was a sheet of Hostaphan 2000 2SLK (available from Mitsubishi), which is a polyester film with a silicone release agent on one surface. The film had a thickness of about 0.05 mm (∼2 mil). The stabilizing film was disposed onto the gel precursor such that the surface of the film that was coated with the silicone release agent was in contact with the gel precursor. Manual pressure was applied to the stabilizing film behind the interface between the gel precursor and the stabilizing film and the stabilizing film was advanced over the gel precursor until the entire surface of the gel precursor was covered with the stabilizing film.

The mold was closed and pressurized to about 172.37 kPa, i.e. 25 pounds per square inch (psi). After approximately four (4) minutes, the mold was opened and a colorless, transparent sheet containing thirty six (36) molded heel inserts was manually removed from the mold. The sheet was capable of being manually removed from the mold without adhering to the surface of the mold or to the hands of the operator.

The polyethylene support/carrier layer for the barrier layer was removed, and then the sheet was die cut around the perimeter of each of the thirty six (36) heel inserts. The sheet was capable of being die cut without adhering to the die cutter as a result of the stability provided by the polyester layer and the barrier layer. The molded heel inserts were then removed from the sheet.

The dimensions of each of the molded, die cut heel inserts was about 101.6 mm (∼four (4) inch) by 33.02 mm (∼1.3 inch). The molded shoe inserts were flexible, pliable, colorless and transparent, and exhibited minimal shrinkage in comparison to the dimensions of the individual heel insert molds.

To apply the heel insert to the interior of a shoe, the polyester layer was manually removed from the heel insert, thereby exposing the underlying polyurethane gel. The polyurethane gel was disposed against the interior of the shoe. The polyurethane gel was extremely tacky, such that it adhered to the interior surface of a shoe heel in the absence of a separate or added adhesive. The heel insert did not adhere to the user's foot due to the presence of the barrier layer, which provided a smooth surface against the user's heel. The polyurethane gel was very soft and pliable, and the polyurethane barrier layer flexed with the movement of the gel. Because the heel insert was colorless and transparent, it was not visible to a casual observer.

### EXAMPLE 2

Formation of a colorless, transparent self-adhesive heel strap insert for a ladies sling-back type shoe.

A metal mold comprising one hundred forty (140) mold units, each defining a heel strap insert, was selected for use. The mold comprised a recessed region of about 0.508 mm (∼0.020"), and a gasket spaced apart both from the perimeter of the mold edge and from the recessed region. The dimensions of each of the one hundred forty (140) mold units were about 76.2 mm (∼3.0 inch) by about 7.9 mm (∼0.3125 inch). The same materials and process that were used in Example 1 were used in the present example.

The dimensions of each of the molded, die cut heel strap inserts was about 76.5 mm (∼3.01 inch) by about 8.2 mm (∼0.3225 inch). Thus, the molded heel strap inserts exhibited minimal shrinkage in comparison to the dimensions of the individual heel strap insert molds. The molded heel strap inserts were flexible, pliable, colorless and transparent. The polyester layer was manually removed from the heel strap insert, exposing the underlying polyurethane gel, which was extremely tacky, allowing it to be adhered to the interior surface of a sling-back type strap of a women's' shoe, in the absence of a separate or added adhesive. The heel insert did not adhere to the user's foot due to the presence of the barrier layer, which provided a smooth surface against the user's heel. The polyurethane gel was very soft and pliable, and the barrier layer flexed with the movement of the gel. Because the heel insert was transparent, it was not visible to a casual observer

### EXAMPLE 3

Formation of a colored, self-adhesive, insert for a rigid toothbrush handle.

A metal mold defining fifty (50) toothbrush handle inserts was selected for use. The mold comprised a recessed region of about 0.508 mm (∼0.020"), and a gasket spaced apart both from the perimeter of the mold edge and from the recessed region. The dimensions of each of the 50 mold units had a length of about 101.6 mm (∼4 inch) and a width that varied from about 3.17 mm (∼1/8 inch) to about 9.52 mm (∼3/8 inch). The depth of the mold units varied from about 3.17 mm (∼1/8 inch) to about 9.52 mm (∼3/8 inch). The same materials and process that were used in Example 1 were used in the present example, with the addition of about 0.4 wt.% of a chemical dye to the gel precursor (Blue TR Repliplast 67798 available from Pat Products).

The dimensions of each of the molded, die cut toothbrush handle was about 107.9 mm (∼4.25 inch) by about 15.9 mm (∼0.625inch).

The resulting individual molded toothbrush handle inserts were blue, transparent, flexible and pliable, and exhibited minimal shrinkage in comparison to the dimensions of the individual toothbrush handle mold units.

The Hostaphan polyester film was manually removed from the toothbrush handle insert, thereby exposing the underlying blue polyurethane gel. The polyurethane gel was extremely tacky, allowing it to be adhered to a recessed region of a rigid toothbrush handle, in the absence of a separate or added adhesive. The blue color of the handle insert provided an aesthetic appeal to the user.

Portions of the handle insert were thicker than the depth of the recessed region in the rigid portion of the toothbrush handle. Therefore, portions of the handle insert were raised relative to the surface of the rigid handle. The polyurethane gel was very soft and pliable, and the barrier layer flexed with the movement of the gel. The surface of the polyurethane barrier film provided a smooth surface against the user's hand. The antifungal/antibacterial agent in the polyurethane barrier film provided protection against the formation of bacteria/fungus in the high humidity of a bathroom environment.

### EXAMPLE 4

Formation of a colored, patterned self-adhesive, insert for a rigid toothbrush handle.

The same mold and materials that were used in Example 3 were used in the present example. After disposing the gel precursor onto the barrier layer, a fabric layer was disposed as a sheet over a portion of the gel precursor. The fabric had various colors and patterns. Pressure was applied manually to the fabric layer behind the interface of the gel precursor and the fabric layer while advancing the fabric layer over the remaining exposed gel precursor, until the fabric layer covered the entire surface of the gel precursor.

A pressure sensitive adhesive was disposed onto the fabric layer. The pressure sensitive adhesive was product number 950 from 3M.

A sheet of the Hostaphan 2000 2SLK stabilizing film was disposed over the pressure sensitive adhesive, such that the silicone release agent was in contact with the pressure sensitive adhesive.

The mold was closed and pressurized to about 25 pounds per square inch (psi). After approximately four (4) minutes, the mold was opened and a patterned sheet containing the molded toothbrush handle inserts was manually removed from the mold and die cut as in previous examples.

The toothbrush handle inserts were flexible and pliable, and exhibited minimal shrinkage in comparison to the dimensions of the individual toothbrush handle mold units.

The Hostaphan polyester film was manually removed from the toothbrush handle insert, thereby exposing the underlying pressure sensitive adhesive that was disposed on the fabric layer, and the handle insert was thereby adhered to a recessed region of a rigid toothbrush handle. The pattern of the fabric was visible through the Isotec Gel and the Vacuflex film, providing an aesthetic appeal to the user.

The method(s) of the present disclosure can comprise one or more of the following advantages: 1) the use of the relatively thin barrier layer and the release layer on opposite sides of the polymerized gel layer allows relatively low durometer polymeric materials to be handled in molding equipment and by the equipment operators, without adhering to the equipment and/or operators; 2) the use of the relatively thin barrier layers allows the use of reduced total amounts of additives, which reduces costs; 3) the use of the relatively thin barrier layer allows relatively low durometer polymeric materials to be molded into a variety of shapes, sizes, densities, and to form articles in which the cross-sectional area varies in size, shape and density; 4) the use of the stabilizing layer reduces and/or eliminates shrinkage of the gel precursor, polymeric gel and/or barrier layer during and after processing; 5) when using a polyurethane gel, the process is capable of providing colorless and transparent articles that do not yellow, as is typical of polyurethanes after exposure to ultra-violet energy.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

Reference signs used in the claims should not be seen as limiting the extent of the matter protected by the claims; the reference signs are used in an illustrative sense only to aid the addressee in the understanding of the claims.

## Claims

1. A method of molding an article, comprising:
selecting a first mold section (10) comprising an upper surface (12), the upper surface comprising a recessed region (16), and the recessed region comprising a plurality of mold units (18) disposed therein;
disposing a barrier layer (26) onto the upper surface of the mold, the barrier layer comprising a thermoplastic elastomeric (TPE) material;
dispensing a first portion of a polymeric gel precursor (28) onto the barrier layer; disposing a stabilizing layer (30) over the polymeric gel precursor and forming an interface (32) between the gel precursor and the stabilizing layer;
advancing the interface while applying pressure to the stabilizing layer adjacent to the interface, until the gel precursor is covered by the stabilizing layer;
closing the mold;
forming a polymeric gel (29) from the gel precursor; and
removing a sheet (33) comprising a plurality of molded articles (19) interconnected by a layer of polymerized gel.

2. The method of Claim 1, comprising releasing the molded articles (19) from the sheet (33).

3. The method of claim 1, comprising disposing a fabric layer (34) onto the barrier layer (26) before dispensing the first portion of the polymeric gel precursor (28).

4. The method of Claim 1, comprising
disposing a fabric layer (34) onto the first portion of the gel precursor (28) before disposing the stabilizing layer (30);
disposing a fabric layer (34) onto the first portion of the gel precursor (28); and disposing a second portion of the gel precursor (28) onto the fabric layer (34).

5. The method of claim 4, comprising disposing an adhesive material onto the stabilization layer and/or the fabric layer.

6. The method of claim 1, wherein the polymerized layer and the stabilizing layer (30) each comprise an adhesive strength, and the adhesive strength of the stabilizing layer is less than the adhesive strength of the polymerized layer.

7. The method of claim 1, wherein the barrier layer (26) comprises a support layer, and comprising disposing the barrier layer on the mold with the support layer adjacent to the upper surface of the mold.

8. The method of claim 1, wherein the barrier layer (26) and/or the stabilizing layer (30) comprise opposing surfaces, and a release agent is disposed on one or both of the opposing surfaces.

9. The method of claim 1 or claim 8, comprising disposing the release agent on a surface of the barrier and/or stabilizing layers adjacent to the gel precursor (28).

## Patentansprüche

1. Verfahren zum Formen eines Artikels, umfassend :
Auswählen eines ersten Formabschnitts (10) umfassend eine obere Oberfläche (12), wobei die obere Oberfläche einen vertieften Bereich (16) umfasst, und der vertiefte Bereich eine Vielzahl von darin angeordneten Formeinheiten (18) umfasst;
Auftragen einer Barriereschicht (26) auf die obere Oberfläche der Form, wobei die Barriereschicht ein thermoplastisches elastomeres (TPE) Material umfasst;
Aufbringen einer ersten Portion eines polymeren Gelvorläufers (28) auf die Barriereschicht;
Aufbringen einer stabilisierenden Schicht (30) über den polymeren Gelvorläufer und Formen einer Grenzfläche (32) zwischen dem Gelvorläufer und der stabilisierenden Schicht;
Vorwärtsbewegen der Grenzfläche während Druck auf die stabilisierende Schicht, die an die Grenzfläche grenzt, angewandt wird, bis der Gelvorläufer von der stabilisierenden Schicht bedeckt ist;
Schließen der Form;
Bilden eines polymeren Gels (29) aus dem Gelvorläufer; und
Entfernen eines Sheets (33) umfassend eine Vielzahl von geformten Artikeln (19), die durch eine Schicht polymerisierten Gels verbunden sind.

2. Verfahren nach Anspruch 1, umfassend ein Freisetzen der geformten Artikel (19) aus dem Sheet (33).

3. Verfahren nach Anspruch 1, umfassend ein Aufbringen einer Gewebeschicht (34) auf die Barriereschicht (26) bevor die erste Portion des polymeren Gelvorläufers (28) aufgebracht wird.

4. Verfahren nach Anspruch 1, umfassend
Aufbringen einer Gewebeschicht (34) auf die erste Portion des Gelvorläufers (28) bevor die stabilisierende Schicht (30) aufgebracht wird;
Aufbringen einer Gewebeschicht (34) auf die erste Portion des Gelvorläufers (28); und
Aufbringen einer zweiten Portion des Gelvorläufers (28) auf die Gewebeschicht (34).

5. Verfahren nach Anspruch 4, umfassend ein Aufbringen eines Haftmaterials auf die stabilisierende Schicht und/oder die Gewebeschicht.

6. Verfahren nach Anspruch 1, wobei die polymerisierte Schicht und die stabilisierende Schicht (30) jeweils eine Haftfestigkeit umfassen, und die Haftfestigkeit der stabilisierenden Schicht geringer ist als die Haftfestigkeit der polymerisierten Schicht.

7. Verfahren nach Anspruch 1, wobei die Barriereschicht eine Trägerschicht umfasst, und umfassend ein Aufbringen der Barriereschicht (26) auf die Form, wobei die Trägerschicht an die obere Oberfläche der Form grenzt.

8. Verfahren nach Anspruch 1, wobei die Barriereschicht (26) und/oder die stabilisierende Schicht (30) gegenüberliegende Oberflächen umfassen, und ein Trennmittel auf einer oder auf beiden der gegenüberliegenden Oberflächen aufgebracht wird.

9. Verfahren nach Anspruch 1 oder Anspruch 8, umfassend ein Aufbringen des Trennmittels auf die Oberfläche der Barriereschichten und/oder stabilisierenden Schichten, die an den Gelvorläufer (28) grenzen.

## Revendications

1. Procédé de moulage d'un article, comprenant :
la sélection d'une première section de moule (10) comprenant une surface supérieure (12), la surface supérieure comprenant une région en retrait (16), et la région en retrait comprenant une pluralité d'unités formant moules (18) disposées en son sein ;
la disposition d'une couche de barrière (26) sur la surface supérieure du moule, la couche de barrière comprenant une matière élastomère thermoplastique (TPE) ;
la distribution d'une première partie d'un précurseur de gel polymère (28) sur la couche de barrière ;
le dépôt d'une couche de stabilisation (30) sur le précurseur de gel polymère et la formation d'une interface (32) entre le précurseur de gel et la couche de stabilisation ;
l'avancement de l'interface tout en appliquant une pression à la couche de stabilisation adjacente à l'interface, jusqu'à ce que le précurseur de gel soit couvert par la couche de stabilisation ;
la fermeture du moule ;
la formation d'un gel polymère (29) à partir du précurseur de gel ; et
l'enlèvement d'une feuille (33) comprenant une pluralité d'articles moulés (19) interconnectés par une couche de gel polymérisé.

2. Procédé selon la revendication 1, comprenant la libération des articles moulés (19) depuis la feuille (33).

3. Procédé selon la revendication 1, comprenant le dépôt d'une couche de tissu (34) sur la couche de barrière (26) avant la distribution de la première partie du précurseur de gel polymère (28).

4. Procédé selon la revendication 1, comprenant
le dépôt d'une couche de tissu (34) sur la première partie du précurseur de gel (28) avant le dépôt de la couche de stabilisation (30) ;
le dépôt d'une couche de tissu (34) sur la première partie du précurseur de gel (28) ; et
le dépôt d'une seconde partie du précurseur de gel (28) sur la couche de tissu (34).

5. Procédé selon la revendication 4, comprenant le dépôt d'une matière adhésive sur la couche de stabilisation et/ou la couche de tissu.

6. Procédé selon la revendication 1, dans lequel la couche polymérisée et la couche de stabilisation (30) présentent chacune une force adhésive, et la force adhésive de la couche de stabilisation est inférieure à la force adhésive de la couche polymérisée.

7. Procédé selon la revendication 1, dans lequel la couche de barrière (26) comprend une couche de support, et comprenant le dépôt de la couche de barrière sur le moule, la couche de support étant adjacente à la surface supérieure du moule.

8. Procédé selon la revendication 1, dans lequel la couche de barrière (26) et/ou la couche de stabilisation (30) comprend des surfaces opposées, et un agent de libération est disposé sur une ou les deux des surfaces opposées.

9. Procédé selon la revendication 1 ou la revendication 8, comprenant le dépôt de l'agent de libération sur une surface des couches de barrière et/ou de stabilisation adjacentes au précurseur de gel (28).
